# EUROPEAN PATENT SPECIFICATION

(11) **EP 1 239 031 B1**
(45) Date of publication and mention of the grant of the patent: **20.12.2006**
(21) Application number: 02004732.0
(22) Date of filing: 01.03.2002
(51) Int. Cl.: C12M 1/34, B01L 3/00, C12M 1/26

(54) **Sampling mono-use sterilizable unit for determinations in microbiology and in chemical-clinical applications**
Sterilisierbare Probennahmevorrichtung zum einmaligen Gebrauch für mikriobiologische Bestimmungen und klinisch-chemische Verwendungen
Unité de prélèvement stérilisable à usage unique pour des détérminations en microbiologie et des applications clinico-chimiques

(30) Priority: 02.03.2001 IT MI010434
(43) Date of publication of application: 11.09.2002
(73) Proprietor: Dall'Oglio, Stefano, 20146 Milan (IT)
(72) Inventor: Dall'Oglio, Stefano, 20146 Milan (IT)
(74) Representative: Gervasi, Gemma

(56) References cited:
- EP-A- 0 450 850
- WO-A-96/04067
- WO-A-02/068580
- US-A- 5 108 707

## Description

### Field of the invention

The present invention regards the field of sampling and measurement disposable systems for microbiology and clinical chemistry.

In particular this invention concerns a sterilizable disposable unit for sampling, reacting and measuring for determinations in the field of microbiology, capable of allowing collection of possible bacterial pollutants in gas, air, liquids, by unskilled operators and to determine the amount of said pollutants directly on the site of sampling rather than in a laboratory, and also for determinations in the field of clinical chemistry for the selective measurement of the amounts of specific elements present in organic liquids like urine and saliva and others.

### State of the art

One of major safety problems concerns microbiological pollution, with special attention to conditions of contamination risk in protected areas or to bacterical pollution of products of wide-spread consumption.

These risk categories include nosocomial infections, pollution of pharmaceutical products, of agriculture foodstuffs, of drinkable waters, of air conditioning systems, as well as risks of biological deterioration of special containers for dangerous products, such as radioactive waste, and pollution of production plants for ultrapure water for use either in pharmacological products or semiconductors.

Measurement of microbic contamination is traditionally based on analytical methods involving the growth of bacterial strains in culture mediums with employment of skilled staff both for sample collection and for culture preparation in well equipped laboratories, with times required for the development of the cultures for the identification of the single strains of pathogenic microorganisms of up to 72 hours.

In order to face the foodstuff industry requirements, to guarantee in a short time product sterility from any kind of bacteria, measurements systems have been developed, capable to recognize in a few minutes the presence of bacteria by measuring the quantity of photons emitted by a bioluminescent reaction correlated to cellular ATP content, independently from the species of bacteria: these methods are suitable to be carried out by skilled operators capable of collecting samples to be measured under sterile conditions.

This approach has lead to a growing requirement for measurement methods with luminous output signals, methods that should be quick and reliable, i.e. capable of giving, within a few minutes, a straight response about the presence or absence of bacteria contamination, methods suitable to be carried out by unskilled operators and that guarantee insulation of all products used for the measurement with certainty of pollution absence.

An answer to all these needs is given by the object of the present patent application, i.e. by a disposable sterilizable unit for sampling, reacting and measuring, for determinations both in the field of microbiology and in that of clinical chemistry, capable to allow the performance of measurements of optical signals in the place of the collection of the sample to be measured, and including all the required reagents, in the number from 1 to N for a single measurement, said unit being provided with auto-blocking closing systems suited to allow its use also under difficult conditions such as, for example, in the absence of gravity in space stations.

For microbiological applications, the collection of bacteria, possibly present in air or in liquids, is carried out by means of a portable measuring instrument, which is not an object of the present patent application and, therefore, not described, equipped with a fluid transfer system such as, for example air fans, with a thermostatic system, with an optical reading system with a photon-electrical signal transducer, with electronic circuits with a microprocessor for the management of measurement sequences with data processing and measurements visual display.

The collection of sample of bacteria to be measured is carried out by placing, into said measurement instrument, the disposable sampling unit object of present patent, which is provided with a sterile filter having a suitable porosity, for example 0.2 micrometer, and which, with a simple operation can be positioned in order to be passed through by the gaseous or liquid fluid to be checked.

Thus, if the filter is passed through by a known volume of liters of air or of water, by the measurement of the biomass intercepted by means of reagents of known type, capable, for example, to measure the quantity of bacterial cellular ATP in a species unaffected way, the amount per liter of the bacterial charge present in said fluid is determined.

Of course, one of the critical conditions to be accomplished is the filter sterility before and after the sampling procedure, which requires an air and liquid-tight system both before and immediately after the end of the sampling.

### Purpose of the invention

A first purpose of the present invention, is to provide a new and more effective solution to the problem given by the measurement for the identification and the quantification of microbiologic pollutants, possibly present in fluids or gases.

A second purpose of the present invention, is to provide a new and more efficient solution to the problem given by the measurement for the identification and the quantification to be carried out on the site of collection of specific elements, present in biologic fluids.

### Summary of the invention

The present invention relates to a disposable, sterilizable unit for sampling, reacting and measuring, comprising:
- a body of plastic material including a reaction chamber in which a filter is provided for the collection of microbes present in a fluid whose possible microbiologic pollution must be measured;
- an optically transparent and liquid tight element, moveable with respect to said body and capable of enclosing said reaction chamber or exposing it to a liquid or gas flow to be tested;
- one or more deformable tanks containing suitable measurement reagents;
- a deformable tank intended to contain discharge liquids;
all said tanks being individually connected to the reaction chamber by means of a network of microchannels provided in the unit body in order to guarantee the tightness of the unit against possible spilling out of liquids.

According to another embodiment, the present invention relates to a disposable, sterilizable unit for sampling, reacting and measuring, comprising:
- a body of plastic material including a reaction chamber in communication with a pierceable and tight re-sealable septum which can be accessed from outside by means of a syringe;
- an optically transparent and liquid tight element enclosing the reaction chamber;
- one or more deformable tanks containing appropriate reagents for measurement;
- a deformable tank intended to contain discharge liquids;
all said tanks being individually connected to the reaction chamber by means of a network of micro-channels provided in the unit body in order to guarantee tightness of the unit against possible spilling out of liquids.

### List of the drawings

Figures 1, 2, 3, 4 show schematically one of the elements building up an unit according to the present invention, respectively in front view, back view, vertical cross-section and horizontal-cross-section.

Figures 5, 6, 7 and 8 show schematically another one of the elements building up an unit according to the present invention, respectively in back view, front view, vertical cross-section and horizontal-cross-section.

Figures 9, 10, 11 and 12 show a third element building up an unit according to the present invention, respectively in back cross section, front cross section, lateral and top view.

Figures 13 and 14 show schematically a fourth element, namely a filter building up an unit according to the present invention, respectively in front view and lateral cross section.

Figures 15, 16, 17 and 18 show schematically an unit according to the present invention assembled, respectively in front view, back view, vertical cross-section and horizontal cross-section.

Figures 19 and 20 show schematically an unit according to the present invention inserted in an external measuring instrument, respectively in lateral view and front cross section.

Figure 21 shows schematically a front cross section of an unit according to the present invention inserted in an external measuring instrument in sampling position.

Figure 22 shows a front view of an unit according to the present invention in irreversible stop position after sampling.

### Detailed description of the preferred embodiments

As an example not limiting the scope of the protection given by the appended claims, a possible embodiment according to the present invention is now described.

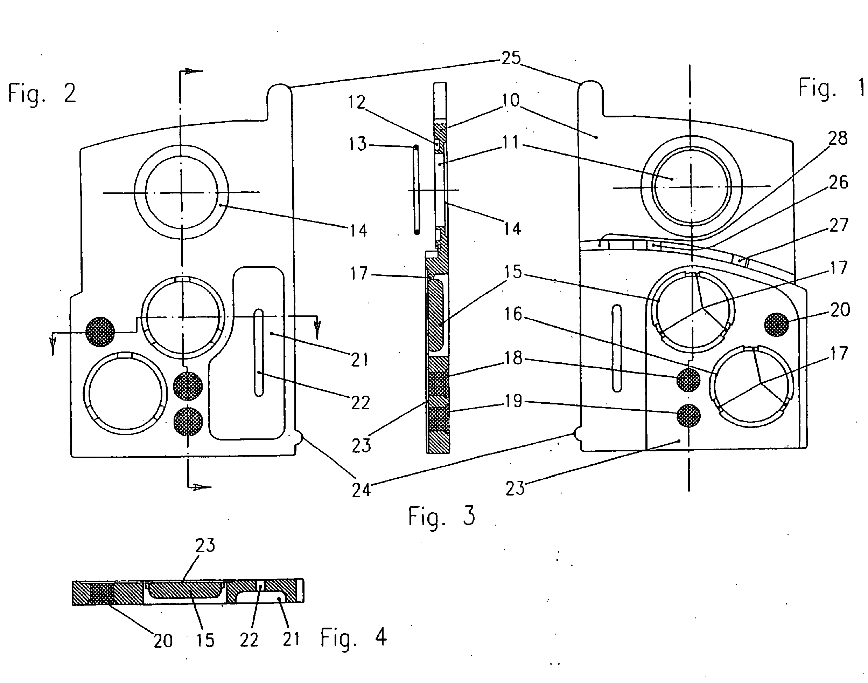

With reference to the figures from figure 1 to 14, it is described a possible implementation, in the embodiment foreseeing two reagents, of four elements building up the sterilizable, disposable sampling unit, in the figures from 15 to 18, it is shown the sampling unit resulting from the four elements assembled and, in the figures from 19 to 22, it is shown the use of said sampling unit with an external measuring instrument.

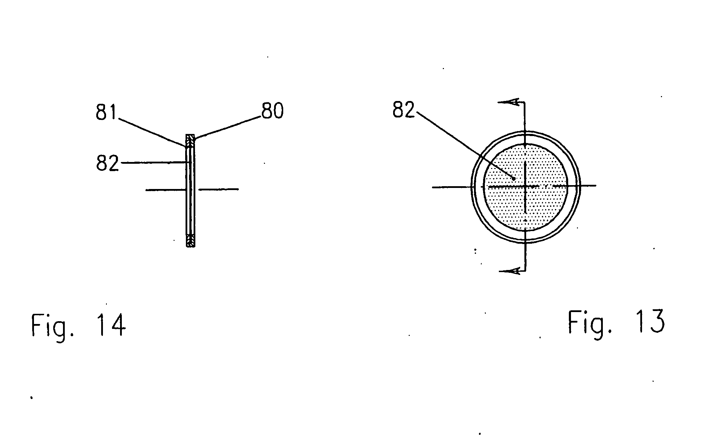

With reference to figures 1, 2, 3 and 4, the first element of said sterilizable disposable sampling unit is shown, in front view in figure 1 and in back view in figure 2, in vertical cross-section in figure 3 and in horizontal cross section in figure 4, said first element consisting of a front half-body in optically non transparent plastic marked by number 10, characterized by the presence of a circular hole, marked by number 11, passing through the whole thickness, said hole being surrounded by a ring-shaped seat, marked by number 12, suited for housing a toroidal gasket of the "O-ring" type, marked by number 13, and being provided on the internal side with a circular flat seat, marked by number 14, for the insertion of the filter body shown in the following figures 13 and 14.

The half-body front element 10 is also characterized by the presence of two buttons marked respectively by numbers 15 and 16, each connected to said body by three breakable tabs, marked by number 17, said buttons being usable, by pression and consequent breakage of the breakable tabs 17, for exerting a compression on the membranes number 45, mounted on the back half-body 40, and to cause the transfer, to the filter chamber, of the reaction liquids contained in the appropriate cavities numbers 48 and 49, as afterwards shown in figures from 5 to 8.

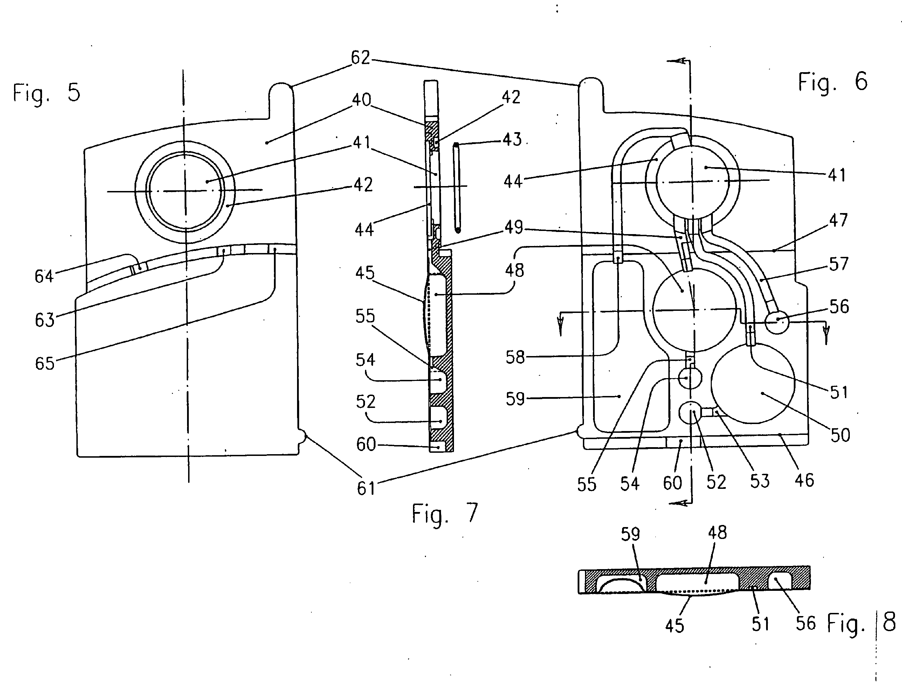

The front halfbody element 10 is also characterized by the presence of three through-going circular bodies, made of an elastomer, pierceable by means of a syringe needle and auto re-sealant, marked respectively by numbers 18 - 19 - 20, the first two used for the filling up with reaction liquids, of the two cavities provided in the back half-body, marked in figures from figure 5 to figure 8, by numbers 48 and 50, and the third one for the possible introduction, by means of an external syringe, of a third reaction liquid or of a sample to be analyzed.

Said front half-body element 10 is also characterized by the presence of a cavity marked by number 21, provided with a slit, marked by number 22, said cavity being suitable to allow the expansion of the deformable containment film closing the discharge port of reaction liquids, which film is provided in the back half-body and is marked by number 45, in the following figures from 5 to 8.

Said front half-body element 10 is also characterized by the presence on its external side of a lowered seat, marked by number 23, suited to receive an adhesive film for protection and security against accidental breakage of the two buttons marked by numbers 15 and 16, described above.

The front half-body element 10 is also characterized by the presence, along its periphery, of two protuberances, suitable to be coupled to similar protuberances which are provided along the periphery of the back half-body, described in the following figures from 5 to 8, the first protuberance on the bottom periphery, marked by number 24 in figure 1 and in figure 2, and by number 61 in figure 5 and in figure 6, and the second one on top the periphery, marked by number 25 in figure 1 and in figure 2, and by number 62 in figure 5 and in figure 6, said protuberances being used the first ones, number 24 and 61, for containing the sterilizable mono-use unit inside the measuring instrument, and the second ones, number 25 and 62, for moving the same inside the measuring instrument.

The front half-body element 10 is also characterized by the presence, on its external central side, of three small shaped cavities also present in the back half-body 40 shown in the following figures from 5 to 8, lying, for both half-bodies 10 and 40, along a little driving groove shaped as a circular arc, corresponding to the movement of the disposable unit inside the measuring instrument, said small cavities being marked by numbers 26-27-28 in figure 1 and by numbers 63-64-65 in figure 5, and having the function of positioning the transparent protection shown in figures from 9 to 2, and more precisely: the cavity 26 of figure 1 and the cavity 63 of figure 5 of maintaining the resting position, also corresponding to the reading position; the cavity 27 in figure 1 and the cavity 64 of figure 5 of maintaining the sampling position; the cavity 28 in figure 1 and the cavity 65 in figure 5 to maintain the irreversible stop final position of the above mentioned transparent cover.

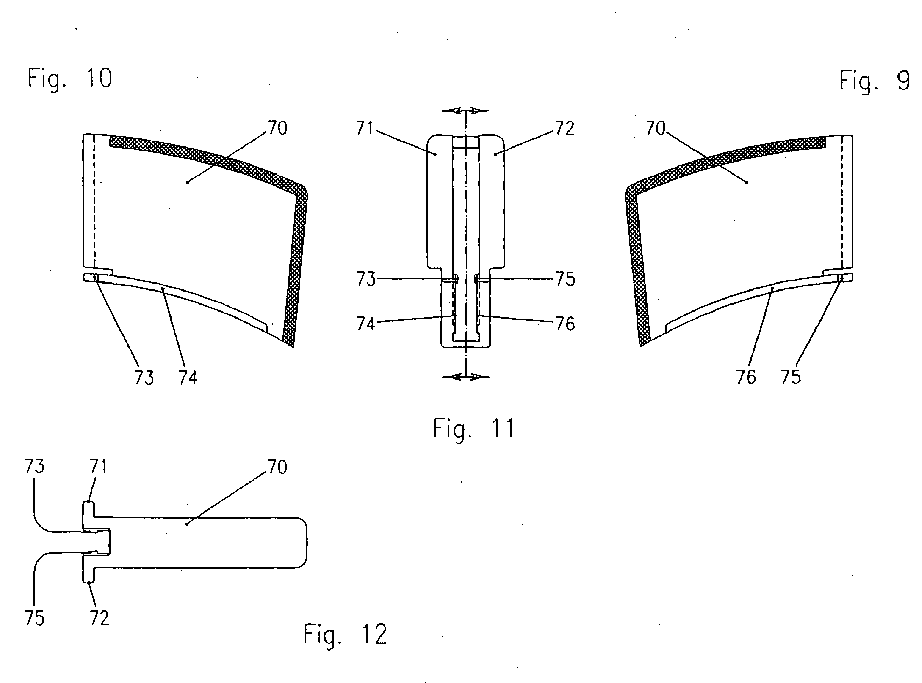

With reference to figures 5, 6, 7 and 8, it is shown, in two views, from the internal side in figure 6, and from the external side in figure 5, in vertical cross section in figure 7, and in horizontal cross section in figure 8, the second element of said sterilizable disposable sampling unit, consisting of a back half-body of optically non-transparent plastic material, marked by number 40, characterized by the presence of a circular hole that goes through the whole thickness, marked by number 41, said hole being surrounded, on the external side, by a ring-shaped seat, marked by number 42, for housing of a toroidal gasket of the "O-ring" type, marked by number 43, and on the internal side by a flat circular seat marked by number 44, for inserting the filter body shown in figures 13 and 14.

The back half-body element 40 is also characterized by the presence of a deformable film of plastic material, marked by number 45, welded in the suited lowered seat provided on the internal side and confined by the lines marked by number 46 towards bottom side, and 47 towards top side, said film being placed as a containment means for the bottom cavities placed below and being shown in figure 8 in state of positive deformation in the cavity 48 and in state of negative deformation in the cavity 59.

This back half-body element 40 is also characterized by the presence of two circular cavities, marked by numbers 48 and 50, each connected to the circular hole 41 by means of microchannels, respectively marked by numbers 49 and 51, said cavities being suitable to contain reaction liquids that, owing to the pressure exerted on the deformable film 45 through the buttons included in halfbody 10 and marked in figure 1 by numbers 15 and 16, will be transferred to the filter chamber formed by the cavities 11 and 41, through the microchannels 49 and 51 previously mentioned.

The back half-body element 40 is also characterized by the presence of three small circular cavities marked by numbers 52-54-56, the first one, 52, connected to the circular cavity marked by number 50, by means of a micro-channel marked by number 53, second one 54 connected to the circular cavity marked by number 48 by means of a micro-channel marked by number 55, the third one 56 directly connected to the circular hole 41 by means of a micro-channel marked by number 57, the last cavity being intended for the possible introduction of a third reaction liquid or of a sample to be analysed by means of an external syringe, whose needle may pierce the body in self-sealing elastomer provided on the front half-body, and marked in figure 1 by number 20.

The back half-body element 40 is also characterized by the presence of a cavity, preferably of rectangular shape, marked by number 59, directly connected with the circular hole 41 by means of the micro-channel marked by number 58, said cavity having the function of discharge tank for the reaction liquids, thanks to the expansion of the containment film 45.

The back half-body element 40 is also characterized by the presence, on its bottom side, of a small rectangular opening, marked by number 60, used to allow the insertion of a positioning tab, provided in the external measuring instrument.

The back half-body element 40 is also characterized by the presence, along its periphery, of two protuberances, suitable to be coupled with the corresponding protuberances also present along the periphery of the front half-body 10, shown in figures 1 and 2, the first one, on the bottom periphery, marked by number 61 in figures 5 and 6, and by number 24 in figures 1 and 2, and the second one, on the top periphery, marked by number 62 in figures 5 and 6, and by number 25 in figures 1 and 2, said protuberances being respectively used, the first ones, for the containment of the sterilizable disposable unit inside the measuring instrument, and the second one, for the movement of the said unit inside the measuring instrument.

The back half-body element 40 is also characterized by the presence on its central external side of three small shaped cavities, also present in the front half-body 10, shown in figure 1 lying on both half-bodies, along a small driving groove shaped as a circular arc correspondent to the movement of the sterilizable disposable unit inside the measuring instrument, said small cavities being marked by numbers 63-64-65 in figure 5, and by numbers 26-27-28 in figure 1, and having the function of positioning the transparent protection shown in figures 9 and 10 and, more precisely, the cavity 63 of figure 5 and the cavity 26 of figure 1 the function of maintaining the resting position, correspondent to the reading position; the cavity 64 of figure 5 and the cavity 27 of figure 1 of maintaining the sampling position, the cavity 65 of figure 5 and the cavity 28 of figure 1 to keep the irreversible stop final position of the above mentioned transparent cover.

With reference to figures 9, 10, 11, and 12, it is shown, in back cross-section in figure 9, and in front cross section in figure 10, in lateral view in figure 11 and in top view in figure 12, the third element of the disposable sterilizable sampling unit, named transparent protection, composed of a main body in optically transparent plastic material, marked by number 70, consisting of circular arc shaped shell opened on two adjacent sides, having two driving elements, located on its external faces and marked by numbers 71 and 72, for holding said element in a predetermined position inside the measuring instrument, and also having two small internal front teeth, marked by numbers 73 and 75 both in the front view of figure 11 and in the top cross section view, of figure 12, and supported by two small internal protuberances, number 74 in the longitudinal left cross section and number 76 in the right longitudinal cross-section, said small protuberances having the function of guiding said transparent protection, while said front teeth 73 and 75 have the function to keep the position of the said transparent protection with respect to the assembled main body of the disposable unit.

With reference to figures 13 and 14, the fourth element of said disposable unit, named filter body, consists of a ring-shaped labiate body made of plastic, marked by number 80, of a second ring-shaped body made of plastic, marked by number 81, which, together with the above mentioned body 80, forms a ring for mounting a circular flat filter marked by number 82, said ring having a diameter equal to that of the circular flat seat marked by number 14 in figure 2 and by number 44 in figure 6.

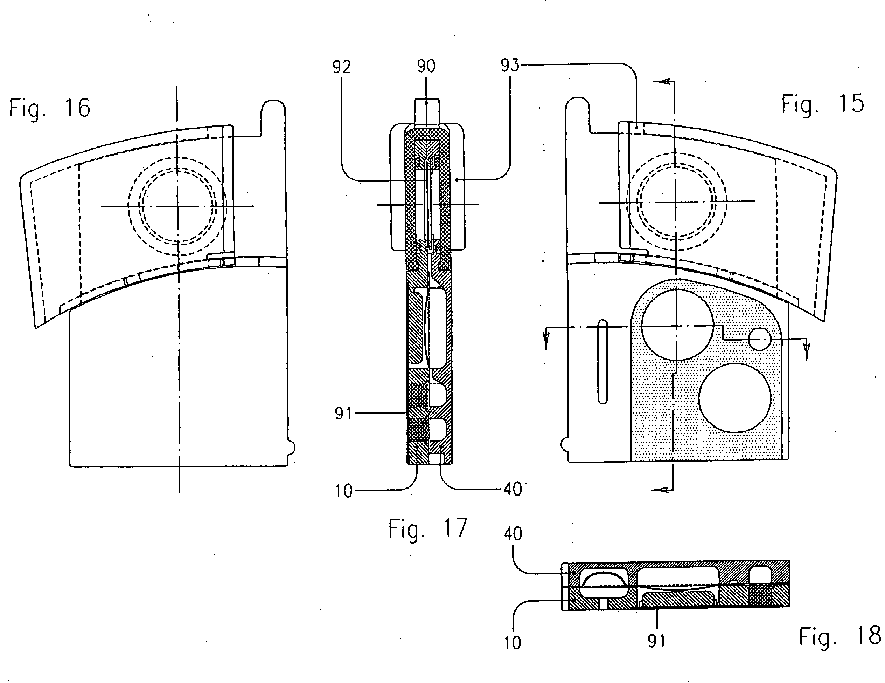

With reference to figures 15, 16, 17, and 18, it is shown in front view in figure 15 and back view in figure 16, in vertical cross-section in figure 17 and in horizontal cross section in figure 18, the disposable unit in its assembled final configuration, with the body marked by number 90, the unit being shown in the condition foreseen for optical measurement, said unit being composed of the back half-body 40, welded to the front half-body 10, between which half-bodies the filter body 92 is placed, in the provided locations of the two half-bodies, front 10 and back 40, kept in position by the half-bodies welded together.

The body 90 is also characterized by the presence of the adhesive film marked by number 91, for protection and safety against an accidental breaking of the two buttons marked in figure 1 by numbers 15 and 16, as well as by the presence of the transparent protection, marked by number 93 in the position in which it is packed and ready to be used, corresponding to the resting and reading position, with the sterilizable disposable unit positioned in the measuring instrument.

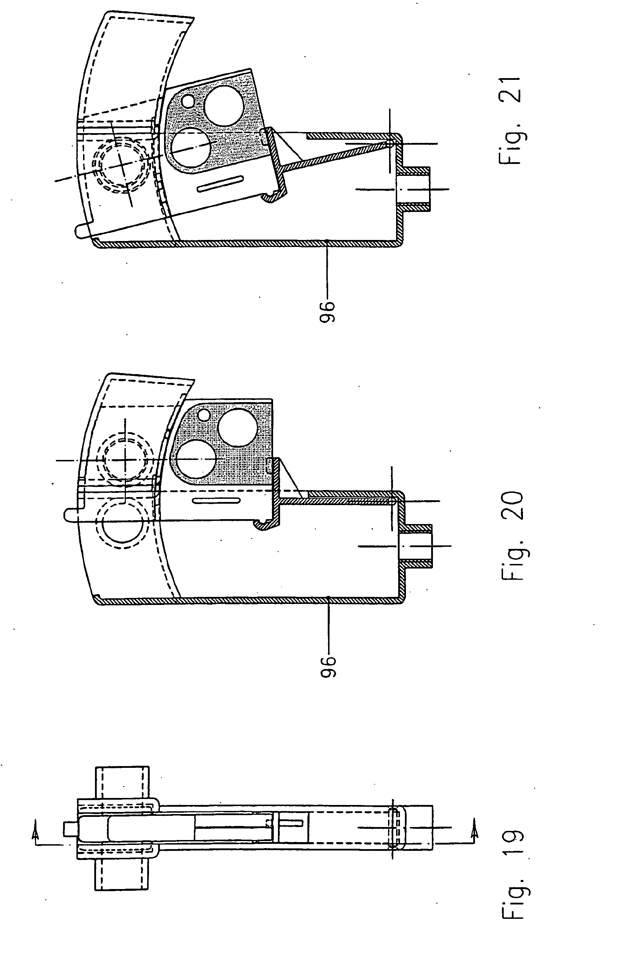

With reference to figures 19 and 20, it is shown, in two views, a lateral view in figure 19 and front view in figure 20, the disposable unit inserted in a possible external measuring instrument marked by number 96, capable of carrying out the sampling procedures and optionally also the subsequent procedures of optical measurement.

With reference to figure 21, it is shown, in a front cross-section, only the disposable unity inserted in a possible external measuring instrument, marked by number 96, in fluid sampling position reached by acting on the protuberances 26 and 62 of the disposable unit that protrudes of the external recipient structure and by subsequently rotating the body of the unit.

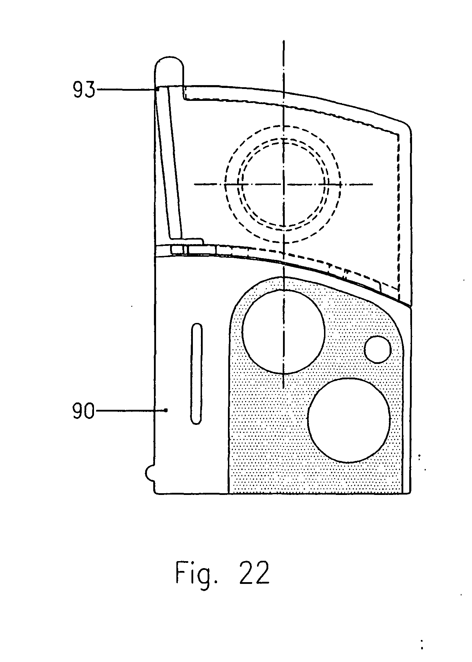

With reference to figure 22, the body 90 is shown after the conclusion of the sampling and measurement procedures with the transparent protection 93 rotated into its irreversible stop position, suitable to guarantee the impossibility of any risk of accidental loss of liquids and of consequent chemical and biological pollution: in this condition the unit is ready for the operations of displacement of the reagents and for the following optical measurements.

The transparent, liquid-tight element 70 may be transparent on one or both sides, depending on how the measurement reaction may be read. For example, in case a biochemical reaction of measurement is adopted, which causes emission of photons for chemiluminescence, an element 70, which is transparent on one side only, is suitable; in case the biochemical reaction of measurement causes emission of photons due to fluorescence, phosphorescence, or requires a measurement of optical absorption, it may be advantageous to provide an element 70, which is transparent on both sides.

The deformable tanks may be emptied by the pressure exerted by an operator acting on the deformable membrane 45. If found advantageous, however, an automatic mechanical system, acting on the external part of the membrane 45 may be provided, to cause the transfer of the reagents.

The capacity of the reaction chamber formed by the cavities 11 and 41 may be chosen according to the requirements of the analysis to be carried out. For example, it can range from 20 up to 1000 microliters.

## Claims

1. Disposable, sterilizable unit for sampling, reacting and measuring, comprising:
• a body of plastic material (90) including a reaction chamber (11, 41) in which a filter (82) is provided for the collection of microbes present in a fluid whose possible microbiologic pollution must be measured;
• an optically transparent and liquid tight element (70), moveable with respect to said body (90) and capable of enclosing said reaction chamber (11, 41), or exposing it to a liquid or gas flow to be tested;
• one or more deformable tanks (48, 50) containing suitable measurement reagents;
• a deformable tank (59) intended to contain discharge liquids; all said tanks being individually connected to the reaction chamber by means of a network of microchannels (49,51,58) provided in the unit body in order to guarantee the tightness of the unit against possible spilling out of liquids.

2. Disposable, sterilizable unit for sampling, reacting and measuring, comprising:
• a body of plastic material (90) including a reaction chamber (11, 41) in communication with a pierceable and tight re-sealable septum (20) which can be accessed from outside by means of a syringe;
• an optically transparent and liquid tight element (70) enclosing the reaction chamber;
• one or more deformable tanks (48,50) containing appropriate reagents for measurement;
• a deformable tank (59) intended to contain discharge liquids; all said tanks being individually connected to the reaction chamber by means of a network of micro-channels (49,51,57,58) provided in the unit body in order to guarantee tightness of the unit against possible spilling out of liquids.

3. Unit according to claim 1 or 2, in which said optically transparent and liquid tight element (70) is **characterized by** transparence on one side only.

4. Unit according to claim 1 or 2 , in which said optically transparent and liquid tight element (70) is **characterized by** transparence on two sides.

5. Unit according to any of the preceding claims, **characterized by** the fact that the deformable tanks (48,50) are in part delimited by a deformable membrane (45) and can be emptied by a mechanical compression carried out on the external part of said membrane (45).

6. Unit according to any of the preceding claims, **characterized by** fact that the discharge tank (59) may be filled by a simple hydraulic pressure produced by the filling of the reaction chamber by the reagents displaced from the deformable tanks (48,50).

7. Unit according to any of the preceding claims, in which the capacity of the reaction chamber (11, 41) is from 20 up to 1000 microliters.

## Patentansprüche

1. Sterilisierbare Einwegeinheit zur Probennahme, zum Reagieren und zum Messen, umfassend:
• einen Körper aus Kunststoffmaterial (90) umfassend eine Reaktionskammer (11, 41), in der ein Filter (82) zum Sammeln von in einer Flüssigkeit, deren mögliche mikrobiologische Verunreinigung gemessen werden muss, vorliegenden Mikroben vorgesehen ist,
• ein optisch transparentes und flüssigkeitsdichtes Element (70), welches mit Bezug zu dem Körper (90) bewegbar ist und befähigt ist, die Reaktionskammer (11, 41) zu umschließen oder diese einem zu untersuchenden Flüssigkeits- oder Gasstrom auszusetzen,
• einen oder mehrere deformierbare Behälter (48, 50) enthaltend geeignete Messreagenzien,
• einen deformierbaren Behälter (59), welcher vorgesehen ist, um Abflussflüssigkeiten zu enthalten, wobei alle Behälter einzeln mit der Reaktionskammer mittels eines Netzwerkes an Mikrokanälen (49, 51, 58) verbunden sind, wobei das Netzwerk der Mikrokanäle in dem Einheitskörper vorgesehen ist, um die Dichtigkeit der Einheit gegenüber möglichem Herausströmen von Flüssigkeiten zu gewährleisten.

2. Sterilisierbare Einwegeinheit zur Probennahme, zum Reagieren und zum Messen, umfassend:
• einen Körper aus Kunststoffmaterial (90) umfassend eine Reaktionskammer (11, 41) in Kommunikation mit einem durchbohrbaren und dichten, wieder versiegelbaren Septum (20), welches von außerhalb mittels einer Spritze zugänglich ist,
• ein optisch transparentes und flüssigkeitsdichtes Element (70), welches die Reaktionskammer umhüllt,
• einen oder mehrere deformierbar Behälter (48, 50) enthaltend geeignete Reagenzien für die Vermessung,
• einen deformierbaren Behälter (59), welcher dazu vorgesehen ist, Abflussflüssigkeiten zu enthalten,
wobei alle Behälter einzeln mit der Reaktionskammer mittels eines Netzwerkes an Mikrokanälen (49, 51, 57, 58) verbunden sind, wobei das Netzwerk an Mikrokanälen in dem Einheitskörper vorgesehen ist, um die Dichtheit der Einheit gegenüber möglichem Herausströmen von Flüssigkeiten zu gewährleisten.

3. Einheit nach Anspruch 1 oder 2, in der das optisch transparente und flüssigkeitsdichte Element (70) durch Transparenz auf lediglich einer Seite **gekennzeichnet** ist.

4. Einheit nach Anspruch 1 oder 2, in der das optisch transparente und flüssigkeitsdichte Element (70) durch Transparenz auf zwei Seiten **gekennzeichnet** ist.

5. Einheit nach einem der vorhergehenden Ansprüche, **dadurch gekennzeichnet, dass** die deformierbaren Behälter (48, 50) teilweise durch eine deformierbare Membran (45) begrenzt sind und durch mechanische Kompression, welche an dem äußeren Teil der Membran (45) ausgeführt wird, entleert werden können.

6. Einheit nach einem der vorhergehenden Ansprüche, **dadurch gekennzeichnet, dass** der Abflussbehälter (59) mit einem einfachen, durch das Befüllen der Reaktionskammer mit den aus den deformierbaren Behältern (48, 50) entnommenen Reagenzien hergestellten hydraulischen Druck befüllt werden kann.

7. Einheit nach einem der vorhergehenden Ansprüche, in der die Kapazität der Reaktionskammer (11, 41) zwischen 20 und bis zu 1.000 Mikroliter beträgt.

## Revendications

1. Unité stérilisable à usage unique pour l'échantillonnage, la réaction et la mesure, comprenant:
• un corps en matériau plastique (90) incluant une chambre de réaction (11,41) dans laquelle un filtre (82) est prévu pour recueillir des microbes présents dans un fluide dont la pollution microbiologique possible doit être mesurée;
• un élément optiquement transparent et étanche au liquide (70), déplaçable par rapport audit corps (90) et apte à renfermer ladite chambre de réaction (11,41), ou à l'exposer à un flux de liquide ou de gaz à tester;
• une ou plusieurs cuves déformables (48, 50) contenant des réactifs de mesure appropriés;
• une cuve déformable (58) destinée à contenir les liquides évacués; toutes les cuves précitées étant reliées individuellement à la chambre de réaction au moyen d'un réseau de micro-canaux (49,51,58) prévus dans le corps unitaire pour garantir l'étanchéité de l'unité contre une déperdition accidentelle possible de liquides.

2. Unité stérilisable à usage unique pour l'échantillonnage, la réaction et la mesure, comprenant :
• un corps en matériau plastique (90) incluant une chambre de réaction (11,41) en communication avec un septum (20) apte à être percé et à être refermé d'une manière étanche à laquelle on peut accéder de l'extérieur au moyen d'une seringue;
• un élément optiquement transparent et étanche au liquide (70) renfermant la chambre de réaction;
• une ou plusieurs cuves déformables (48,50) contenant des réactifs appropriés pour la mesure;
• une cuve déformable (59) destinée à contenir des liquides évacués;
toutes les cuves précitées étant reliées individuellement à la chambre de réaction au moyen d'un réseau de micro-canaux (49,51,57,58) prévu dans le corps unitaire pour garantir l'étanchéité de l'unité contre une déperdition accidentelle possible de liquides.

3. Unité selon la revendication 1 ou 2, dans laquelle ledit élément (70) optiquement transparent et étanche au liquide est **caractérisé par** une transparence sur un côté seulement.

4. Unité selon la revendication 1 ou 2, où ledit élément (70) optiquement transparent et étanche au liquide est **caractérisé par** une transparence sur les deux côtés.

5. Unité selon l'une des revendications précédentes, **caractérisée par le fait que** les cuves déformables (48,50) sont en partie délimitées par une membrane déformable (45) et peuvent être vidées par une compression mécanique excécutée sur la partie externe de ladite membrane (45).

6. Unité selon l'une des revendications précédentes, **caractérisée par le fait que** la cuve d'évacuation (59) peut être remplie par une pression hydraulique simple produite par le remplissage de la chambre de réaction avec les réactifs déplacés des cuves déformables (48,50).

7. Unité selon l'une des revendications précédentes, où la capacité de la chambre de réaction (11,41) est de 20 à 1000 microlitres.
